# EUROPÄISCHE PATENTANMELDUNG

(11) **EP 1 671 861 A1**
(43) Veröffentlichungstag der Anmeldung: **21.06.2006**
(21) Anmeldenummer: 05112015.2
(22) Anmeldetag: 13.12.2005
(51) Int. Cl.: B60S 1/04

(54) **Wischeranordnung**

(30) Priorität: 14.12.2004 DE 102004060429
(71) Anmelder: Intier Automotive Closures (Germany) GmbH, 63877 Sailauf (DE)
(72) Erfinder: Baier-Welt, Christian, 64372 OBER-RAMSTADT (DE)
(74) Vertreter: D'Angelo, Fabio

(57) **Zusammenfassung**

Bei einer Wischeranordnung für ein Kraftfahrzeug mit einem Träger zur Anbringung der Wischeranordnung an dem Fahrzeugkörper oder dergleichen und einem Lagerteil mit einer Wischarmwelle wird eine überlast-knickbare Verbindung zwischen dem Träger und dem Lagerteil vorgeschlagen, die eine Verlagerung des Lagerteils in eine verkippt gehaltene Position freigibt, falls eine auf das Lagerteil wirkende Last einen vorbestimmten Wert überschreitet. Ein Fahrzeug wird mit einer solchen Wischeranordnung ausgerüstet, wobei in Fahrzeuglängsrichtung die Wischarmwellen hinter den jeweiligen Knickachsen A1 der überlast-knickbaren Verbindungen liegen.

## Beschreibung

Die Erfindung betrifft eine Wischeranordnung für ein Kraftfahrzeug und insbesondere eine den Anforderungen nach einem effektiven Schutz bei Fußgängerkollisionen genügende Wischeranordnung.

Eine gebräuchliche Wischeranordnung offenbart die EP 1 103 434 A1. Diese vorbekannte Wischeranordnung ist insbesondere hinsichtlich der gesetzlichen Erfordernisse für den Schutz von Fußgängern bei Kollisionen mit dem Kraftfahrzeug ausgestattet. Anforderungsgemäß muss eine Wischeranordnung einen Aufprall auf die hervorstehenden Enden der Wischerblattantriebswellen die Energie durch eine Nachgiebigkeit so aufnehmen, dass vorbestimmte Beschleunigungswerte nicht überschritten werden. Die bekannte Wischeranordnung löst diese Aufgabe durch eine zerstörbare Axiallagerung der Wischarmwellen, die beim Überschreiten einer axialen Grenzlast ein Zurückgleiten der Wischarmwellen freigibt. Bei der vorbekannten Wischeranordnung müssen jedoch viele Teile in der Axiallagerung genau aufeinander abgestimmt und sorgfältig montiert werden, um die vorgeschriebene Auslösekraft zuverlässig einzuhalten.

Die vorliegende Erfindung stellt sich daher die Aufgabe, eine Wischeranordnung zu schaffen, mit der sich die Anforderungen des Fußgängerschutzes in möglichst einfacher Weise erfüllen lassen.

Diese Aufgabe wird gelöst durch eine Wischeranordnung mit den Merkmalen des Anspruch 1.

Vorteilhafte Ausgestaltungen und Weiterbildungen der erfindungsgemäßen Wischeranordnung sind in den abhängigen Ansprüchen 2 bis 16 angegeben.

Zwei bevorzugte Ausführungsformen der vorliegenden Erfindung sind beispielshalber nachfolgend erläutert, wobei auf die anhängenden Zeichnungen Bezug genommen wird. Darin zeigen:
- Fig. 1: Eine perspektivische Gesamtansicht einer ersten Ausführungsform der vorliegenden Erfindung von vorne;
- Fig. 2: Eine perspektivische Gesamtansicht der ersten Ausführungsform gemäß Fig. 1 von oben;
- Fig. 3: Eine perspektivische Ansicht von rechts auf die erste Ausführungsform gemäß Fig. 1;
- Fig. 4: Eine perspektivische Ansicht wie Fig. 3 jedoch auf eine Ausführungsform mit einem gekippten Lagerteil;
- Fig. 5: Eine perspektivische Gesamtansicht einer zweiten Ausführungsform der vorliegenden Erfindung von vorne;
- Fig. 6: Eine perspektivische Gesamtansicht der zweiten Ausführungsform gemäß Fig. 5 von oben;
- Fig. 7: Eine perspektivische Ansicht von rechts auf die zweite Ausführungsform gemäß Fig. 5; und
- Fig. 8: Eine perspektivische Gesamtansicht wie Fig. 5 jedoch mit einem abgeknickten Abschnitt links.

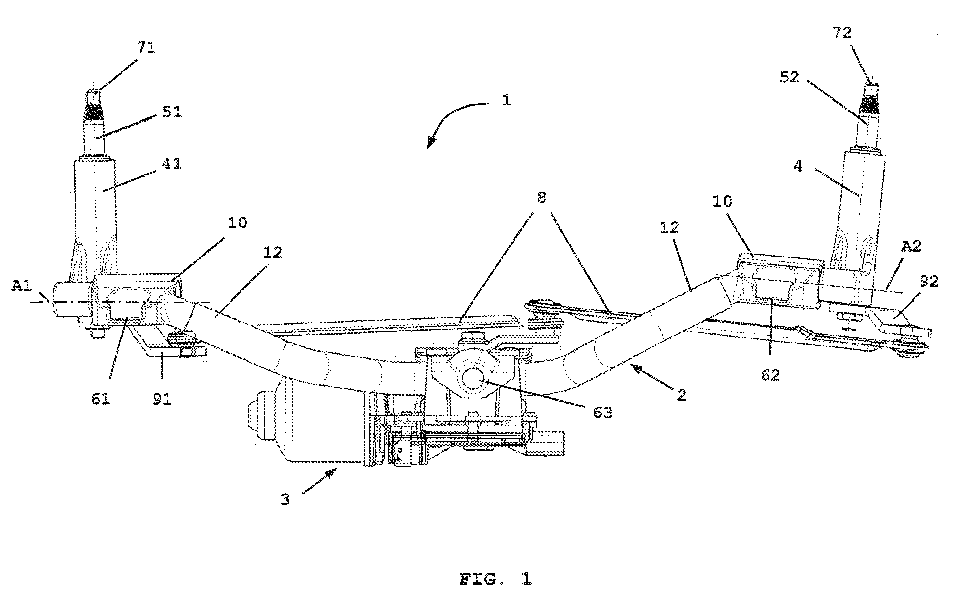

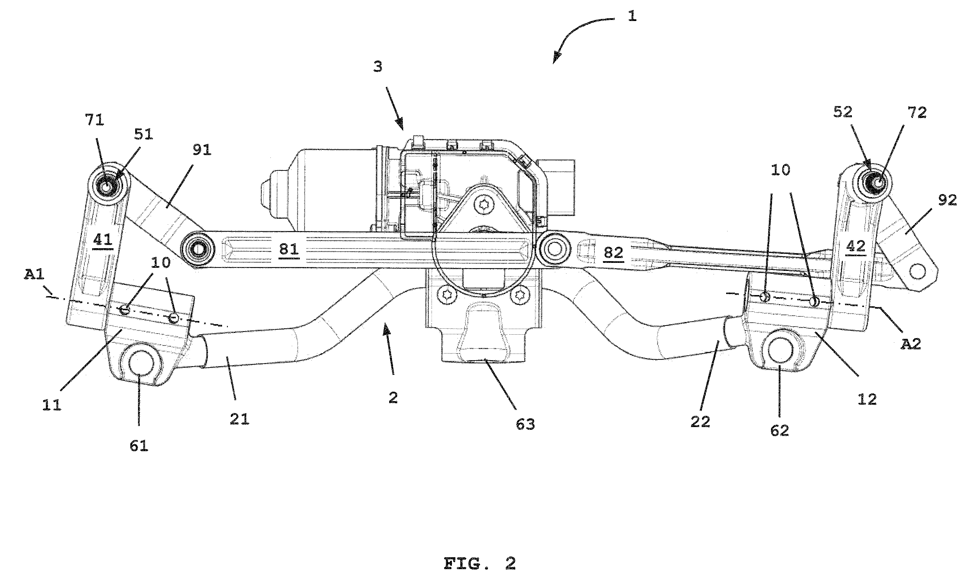

Eine erste Wischeranordnung 1 weist gemäß den Fig. 1 bis 4 einen Träger 2 auf, an dem ein elektromotorischer Antrieb 3 angeordnet ist. An den beiden äußeren Enden des Trägers 2 befinden sich Lagerkörper 41, 42 für die linke und rechte Wischarmwelle 51, 52. Die Wischarmwellen 51, 52 sind in den betreffenden Lagerteilen 41, 42 schwenkbar oder drehbar gelagert. Die oberen Enden beider Wischarmwellen 51, 52 sind dazu eingerichtet, eine starre Verbindung zu den an sich bekannten Wischarmen zu vermitteln, die in den Zeichnungen der Übersichtlichkeit halber ausgelassen sind. Bei montiertem Wischarm ragt allerdings das endständige Befestigungsgewinde 71, 72 der Wischarmwelle 5 über die Anbindung des Wischarms hinaus. Der Bereich der Anbindung des Wischarms, insbesondere des äußeren Endes der Befestigungsgewinde 71, 72 wird deshalb üblicherweise unter einer kleinen Kappe verborgen.

In der Nähe der Lagerkörper 41, 42 und in seiner Mitte weist der Träger 2 Befestigungsstellen 61, 62, 63 für die Anbindung der Wischeranordnung 1 an einen Fahrzeugkörper auf.

Die Dreh- oder Schwenkbewegung der Ausgangswelle des elektromotorischen Antriebs 3 wird in an sich bekannter Weise durch Gestänge 81, 82 auf Kurbelarme 91, 92 an den unteren Enden der linken und rechten Wischarmwelle 51, 52 übertragen. Die Wischarmwellen 51, 52 führen daher beim Betrieb der Wischeranordnung 1 eine Schwenkbewegung aus, die sich auf die Wischarme überträgt.

Jedes der Lagerteile 41, 42 ist über eine überlast-knickbare Verbindung mit einem rohrförmigen Ausleger 21, 22 des Trägers 2 verbunden. Jede dieser überlast-knickbaren Verbindungen verhält sich bis zu einer vorgegebenen Grenzlast wie eine starre Verbindung zwischen den zu verbindenden Teilen 21, 22, 41, 42. Bei einer Belastung der überlast-knickbaren Verbindung über die vorgegebene Grenzlast hinaus gibt die Verbindung jedoch nach und erlaubt dadurch in vorgegebenen Grenzen eine Relativbewegung der verbundenen Teile 21, 22, 41, 42.

In der in den Fig. 1 bis 4 dargestellten ersten Wischeranordnung 1 sind die überlast-knickbaren Verbindungen durch Gelenke 11, 12 oder Scharniere gebildet, die mit einem zerstörbaren oder deformierbaren mechanischen Mittel 10 blockiert sind. Beispielsweise kann eine solche Blockierung durch die gezeigten Scherstifte 10, durch Splinte, Keile oder dergleichen in fluchtende Aussparungen der aneinandergrenzenden beweglichen Teile des Gelenks eingesetzte Mittel erfolgen. Die Blockierung der Gelenke 11, 12 muss so eingerichtet sein, dass im Fall einer über einen vorgegebenen Wert hinausgehenden Last auf das anhängende Lagerteil 41, 42 die Blockierung aufgehoben und die Beweglichkeit des Gelenks 11, 12 hergestellt wird. Im gezeigten Fall werden beim Überschreiten eines vorgegebenen Drehmoments auf eines der Gelenke 11, 12 die darin enthaltenen Scherstifte 10 abgeschert und das Gelenk 11, 12 dadurch freigegeben. Dementsprechend sind die Scherstifte 10 hinsichtlich des verwendeten Materials, ihrer Abmessungen und ihrer Anzahl so ausgelegt, dass eine Zerstörung aller in das Gelenk eingesetzten Scherstifte 10 einerseits ein Mindestdrehmoment auf das Gelenk 11, 12 erfordert und andererseits sicher vor dem Erreichen eines vorgegebenen Höchstdrehmoments erfolgt.

Vorzugsweise verlaufen die Drehachsen der Gelenke 11, 12 annähernd in der selben Richtung wie das zu der darin jeweils gehaltenen Wischarmwelle 51, 52 führende Gestänge 81, 82. Dies stellt sicher, dass die im Betrieb der Wischeranordnung 1 auftretenden Kräfte auf die Halteteile 41, 42 nicht zu bedeutenden Drehmomenten in der Dreh- oder Schwenkachse der Gelenke 11, 12 Anlass geben.

Nach der bestimmungsgemäßen Anbringung der Wischeranordnung 1 an einem Fahrzeug im Bereich dessen sog. Wasserkastens werden die meisten Abschnitte der Wischeranordnung 1 innerhalb der Fahrzeugsilhouette F liegen. Dies gilt insbesondere für den elektromotorischen Antrieb 3 und das Trägerteil 2. Die Enden der Wischarmwellen 51, 52 und eventuell auch die angrenzenden oberen Enden der Halteteile 41, 42 werden hingegen über die Fahrzeugsilhouette F hinausragen. Deshalb können diese Teile ein besonderes Risiko im Fall eines Kopfaufpralls bei einer Kollision eines Fußgängers mit dem fahrenden Fahrzeug darstellen. Dies gilt insbesondere, falls die Wischeranordnung 1 besonders stabil mit dem Fahrzeugkörper verbunden ist oder ein hohes Gewicht aufweist. In beiden genannten Fällen würde die Nachgiebigkeit der hervorstehenden Abschnitte der Wischeranordnung 1 erheblich geringer sein als die der übrigen Fahrzeugoberfläche in diesem Bereich und insbesondere der Motorraumabdeckung. Eine zu geringe Nachgiebigkeit der hervorstehenden Abschnitte der Wischeranordnung 1 würde zu besonders hohen Beschleunigungen beim Kopfaufprall führen und damit das Risiko schwerwiegender und bleibender Schädigungen bedeuten.

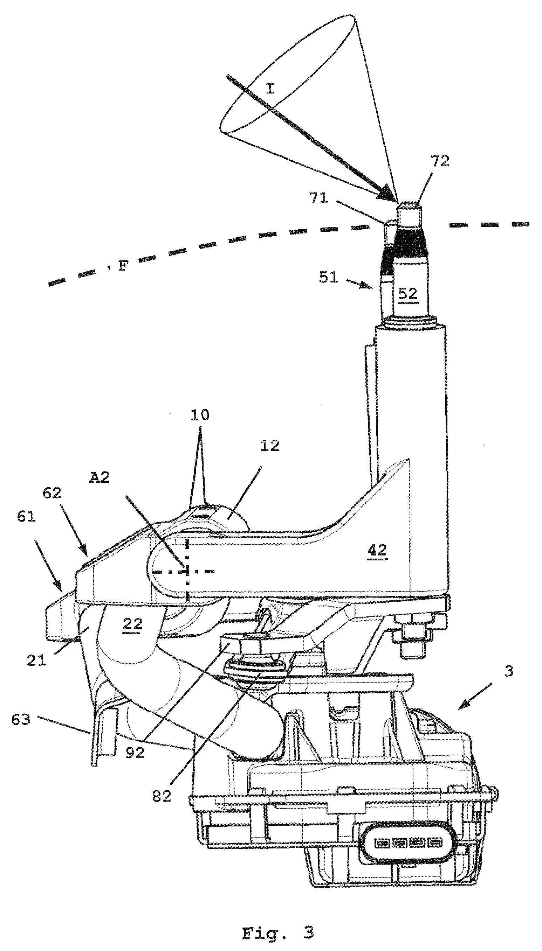

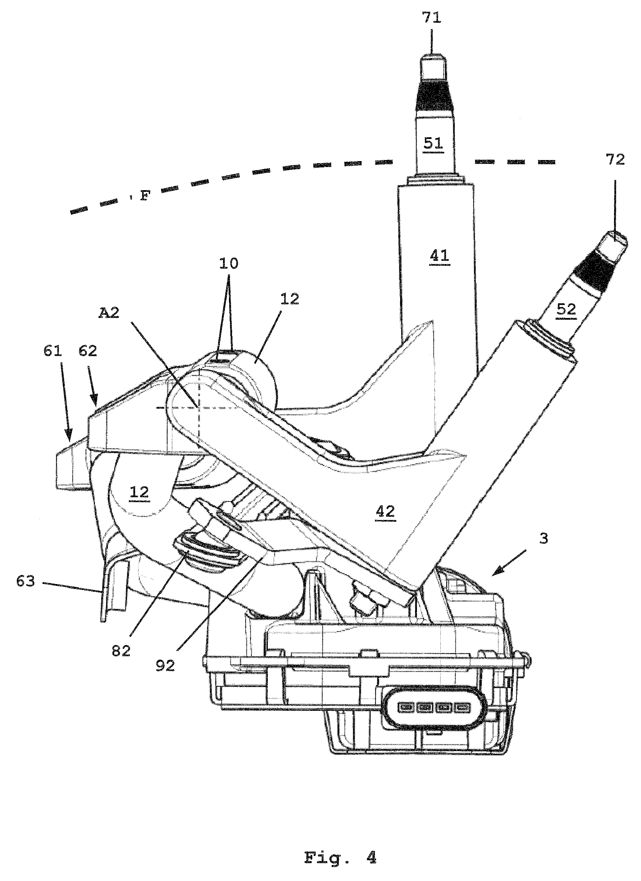

Die beschriebene Wischeranordnung 1 verringert die beschriebenen Risiken für den Fußgänger durch die vorgesehenen überlast-knickbaren Verbindungen gemäß den Fig. 3 und 4. Bei einem Kopfaufprall auf das Ende der rechten, in Fig. 3 und 4 vorderen Wischarmwelle 52 wird auf das haltende Lagerteil 42 eine der Verzögerung des auftreffenden Körperteils entsprechende Kraft I wirken. Erfahrungsgemäß wird die Richtung der Kraft I statistisch am häufigsten in dem in Fig. 3 angedeuteten elliptischen Kegel verlaufen. Die Einleitung einer Kraft I mit einer solchen Richtung auf das Lagerteil 42 wird in der angrenzenden überlast-knickbaren Verbindung, nämlich dem blockierten Gelenk 12 ein entsprechendes Drehmoment hervorrufen. Die beschrieben Wischeranordnung 1 nutzt aus, dass beim normalen Betrieb der Wischeranordnung 1 keinesfalls so hohe Drehmomente erreicht werden, wie sie dem Grenzfall einer schädigenden Beschleunigung beim Kopfaufprall entsprechen. Demnach sind die Scherstifte 10 in den Gelenken 11, 12 der überlast-knickbaren Verbindungen so ausgelegt, dass ein Gelenk 11, 12 unter Zerstörung des jeweiligen Scherstifts 10 erst bei einem Drehmoment frei wird, das wesentlich über den bei normalem Betrieb des Wischeranordnung 1 auftretenden Drehmomenten liegt. Es hat sich gezeigt, dass mit einer solchen Einstellung der überlast-knickbaren Verbindungen die Anforderungen an eine größte auftretende Beschleunigung in dem aufprallenden Körperteil einer Person sicher eingehalten werden können. Nach dem Abscheren der Scherstifte 10 in dem Gelenk 12 zu dem kraftbeaufschlagten Halteteil 42 wird sich dieses aufgrund des Drehmoments in die in Fig. 4 gezeigte gekippte Lage bewegen.

Die beschriebenen Scherstifte 10 stellen eine kostengünstige Möglichkeit für die Schaffung einer überlast-knickbaren Verbindung aus einem einfachen Gelenk 11, 12 dar. Alternativ können die überlast-knickbaren Verbindungen auch durch Sperren eines gleichen oder ähnlichen Gelenks 11, 12 durch eine Klauenkupplung oder eine Überlastrutschkupplung geschaffen werden. Die Klauen- oder Überlastrutschkupplung kann dabei in das Gelenk 11, 12 integriert sein. Eine Ausführungsmöglichkeit für eine integrierte Überlastrutschkupplung besteht insbesondere darin, das Gelenk 11, 12 an seiner Lagerstelle klemmend mit sehr hoher Haftreibung auszubilden. Alternativ oder zusätzlich können die gelenkig miteinander verbunden Teile 41, 42, 21, 22 durch eine starre aber deformierbare Brücke verbunden sein. In diesem Fall würde das Gelenk 11, 12 die im Betrieb der Wischeranordnung 1 auftretenden nicht in der jeweiligen Schwenkachse A1, A2 verlaufenden Dreh- und Knickmomente an der Stelle des Übergangs zwischen dem rohrförmigen Ende 21, 22 des Träger 2 und dem benachbarten Lagerteil 41, 42 aufnehmen. Die deformierbare Brücke würde also nur in dem für einen Aufprall auf eine Wischarmwelle 51, 52 typischen vorbeschriebenen Lastfall beansprucht. Die Auswahl einer einzelnen oder einer Kombination aus den vorbeschriebenen Möglichkeiten steht im Ermessen des Fachmanns und wird sich selbstverständlich am Einzelfall orientieren. Die Vorzüge einer deformierbaren Struktur liegen in deren Eigenschaft, selbst Aufprallenergie aufnehmen zu können. Deswegen müssen die mechanischen Eigenschaften einer solchen deformierbaren Struktur aber auch genau auf die Einbausituation abgestimmt sein.

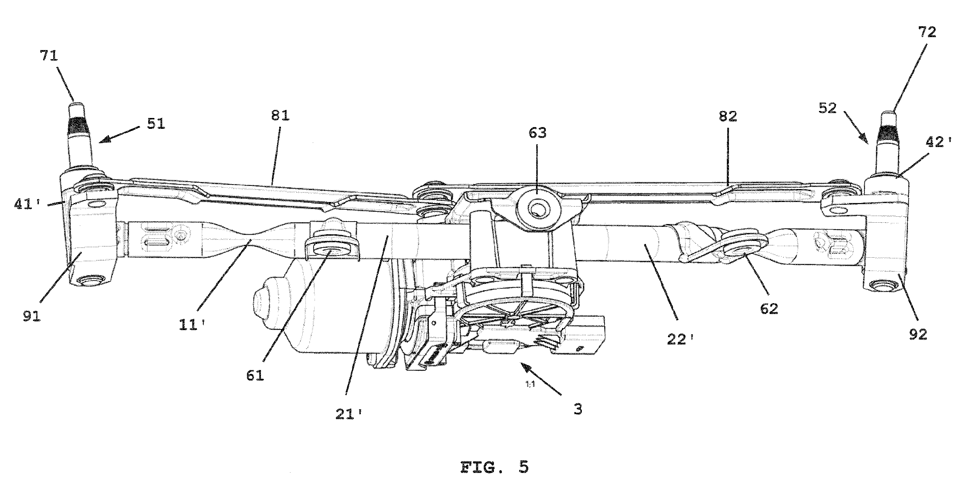

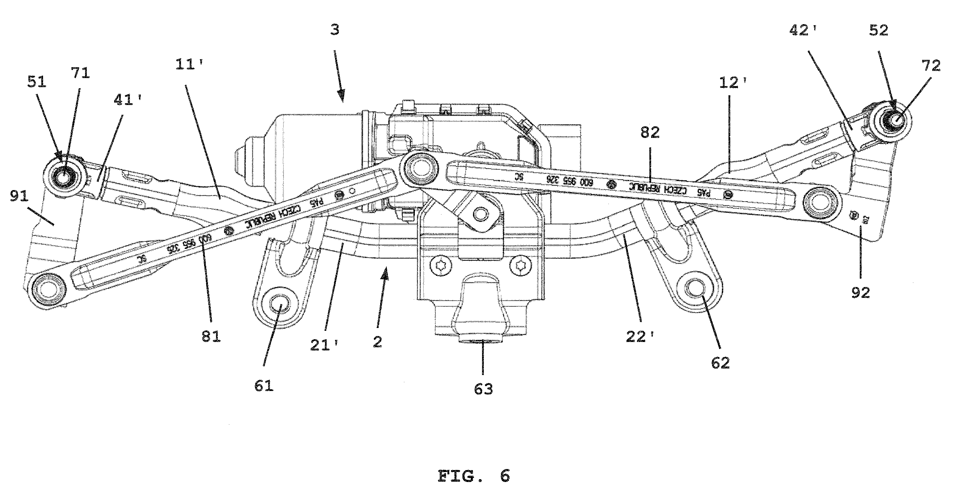

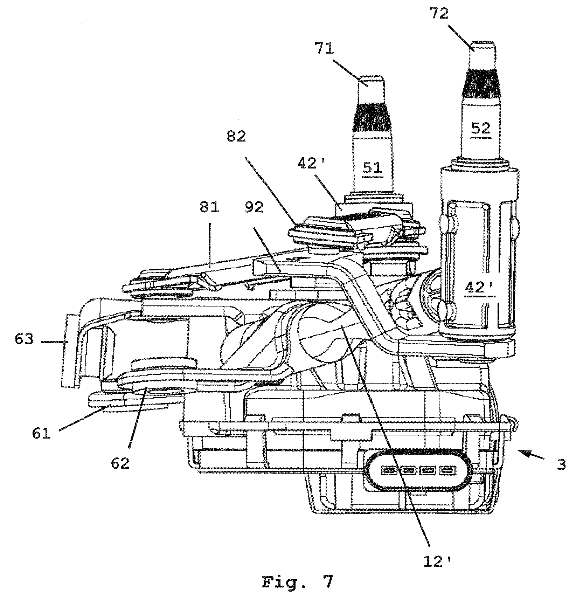

Eine zweite Wischeranordnung 1' zeigen die Fig. 5 bis 7. Diese zweite Wischeranordnung 1' bietet hinsichtlich des Aufprallschutzes bei einer Fußgängerkollision vergleichbare Eigenschaften wie die vorstehend beschriebene erste Wischeranordnung 1. Die zweite Wischeranordnung 1' verzichtet jedoch auf die durch Gelenke oder dergleichen definierten Knick- oder Schwenkachsen und spart dadurch mechanische Bauteile ein. Gemäß Fig. 5 und 6 verbinden starre Strukturen 11', 12' den Träger 2' mit den Lagerteilen 41', 42'. In der gezeigten Wischeranordnung 1' sind die starren Strukturen 11', 12' Teil des jeweiligen rohrförmigen Auslegers 21', 22' an dem Träger 2'. Jeder rohrförmige Ausleger 21', 22' ändert in einem Abschnitt 11', 12' in der Nähe des benachbarten Lagerteils 41', 42' seinen Querschnitt. Dadurch ergibt sich an dieser Stelle eine besondere Abweichung zwischen den Widerstandsmomenten des Auslegers in den verschiedenen Raumrichtungen senkrecht zu der Längsachse des jeweiligen rohrförmigen Auslegers 21', 22'. Die rohrförmigen Ausleger 21', 22' sind in diesen Abschnitten 11', 12' gegenüber einer Knickung oder Verbiegung aufgrund der über das Gestänge 81', 82' eingeleiteten Biegemomente verhältnismäßig unempfindlich. Das bedeutet, dass sich hinsichtlich der vorgenannten Biegemomente im Vergleich zu den anderen Abschnitten der rohrförmigen Ausleger 21', 22' keine wesentliche Schwächung ergibt. Jedoch werden sich die rohrförmigen Ausleger 21', 22' aufgrund von Kräften, die bei einem typischen Aufprall auf die Enden der Wischarmwellen 51, 52 eingeleitet werden, leicht verbiegen oder knicken lassen.

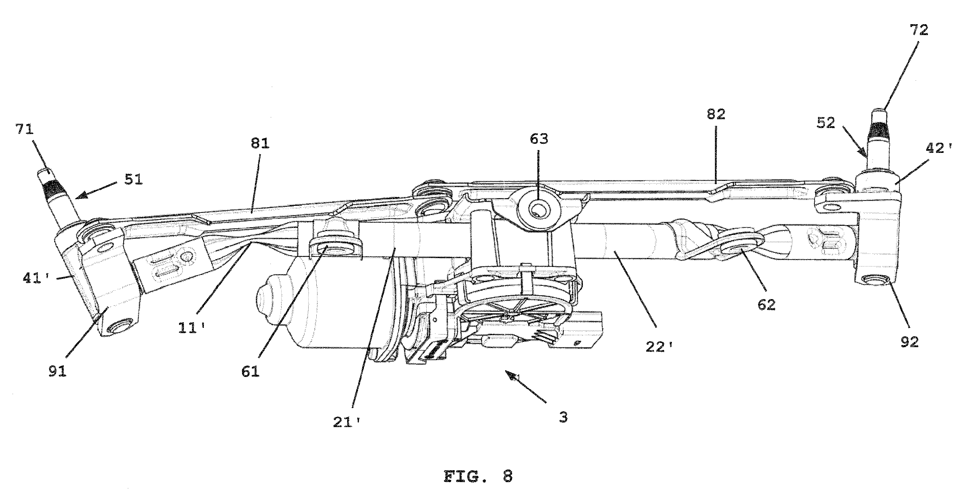

Eine bestimmungsgemäße Verformung an der zweiten Ausführungsform einer Wischeranordnung 1' zeigt Fig. 8. Der linke rohrförmige Ausleger 21' ist an dem geschwächten Abschnitt 11' nach unten gegenüber der ursprünglichen Situation abgewinkelt. Es ist zu erkennen, dass sich der in einer Richtung angequetschte Abschnitt 11' aufgrund der Verbiegung weiter verengt hat unter Verringerung des Widerstandsmoments. Dies bedeutetet, dass in der gezeigten zweiten Wischeranordnung 1' der Widerstand des Abschnitts 11' in der ursprünglichen Form annähernd am größten ist und bei fortschreitender erheblicher Deformation abnimmt.

Eine Verbesserung der zweiten Wischeranordnung 1' sieht vor, die Gestänge 81', 82' sehr eng an dem geschwächten Abschnitt 11', 12' des jeweiligen rohrförmigen Auslegers 21', 22' vorbei zu führen. Durch einen geringen Abstand werden die durch das Gestänge 81', 82' in den jeweiligen Abschnitt 11', 12' eingeleiteten Biegemomente gering ausfallen. Praktisch keine Biegemomente würden in einer noch weiter verbesserten Ausführung realisiert, bei der die Verbindungslinie der Gelenkstellen an den Enden der Gestänge 81', 82' mit der Mittelachse des jeweiligen Abschnitts 11', 12' an dem rohrförmigen Auslegers 21', 22' zusammentreffen. Dies setzte abweichend von der dargestellten Bauform gekröpfte Gestänge 81', 82' voraus.

In einer bevorzugten Einbausituation wird jede der vorbeschriebenen Wischeranordnungen 1 und 1' derart an einem Fahrzeug angebracht sein, dass sich bei dem bestimmungsgemäßen beschriebenen Verhalten in einer Fußgängerkollision das obere Ende der kraftbeaufschlagten Wischarmwelle 51, 52 auf die Frontscheibe des Fahrzeugs zu bewegt. In der Einbaulage müssen die Wischarmwellen 51, 52 also näher an der Windschutzscheibe liegen, als die Knickstelle der jeweiligen angrenzenden überlast-knickbaren Verbindung. In Fahrzeuglängsrichtung liegen die rechte und linke Wischarmwelle 51, 52 also hinter der an das jeweilige aufnehmende Lagerteil 41, 41, 41', 42' angrenzenden Knickstelle der überlast-knickbaren Verbindung, insbesondere hinter der Drehstelle des jeweiligen Gelenks 11, 12 bzw. hinter dem jeweiligen geschwächten Abschnitt 11', 12'. Aus den Fig. 3 und 4 ist hinsichtlich der ersten Wischeranordnung 1 erkennbar, wie in dieser Einbausituation die durch den Aufprall ausgelöste Bewegung des rechten Lagerteils 42 in Richtung der einwirkenden Kraft und damit unter Aufnahme oder Verbrauch von Aufprall- oder Bewegungsenergie erfolgt.

Weiterhin wird in einer bevorzugten Einbausituation die Motorraumabdeckung des Fahrzeugs in der Einbaulage der Halteteile 41, 42, 41', 42' nahe an deren oberes Ende heranreichen. Dadurch wird beim Verkippen eines Lagerteils 41, 42 bzw. 41', 42' dieses zusammen mit der Wischarmwelle 51, 52 vollständig hinter die Fahrzeugsilhouette F zurücktreten, wie es hinsichtlich der ersten Wischeranordnung 1 in Fig. 4 gezeigt ist. Nach der Bewegung der kollisionsbetroffenen hervorstehenden Teile der Wischeranordnung 1, 1' hinter die Fahrzeugsilhouette kann der daran angrenzende Bereich der Motorraumabdeckung zur Aufnahme von Aufprallenergie optimal genutzt werden.

## Patentansprüche

1. Wischeranordnung (1; 1'), aufweisend einen Träger (2) mit Stellen (61, 62, 63) zur Anbringung an einem Fahrzeugkörper, ein Lagerteil (41, 42; 41', 42'), eine Wischarmwelle (51, 52) und eine überlast-knickbare Verbindung (11, 12; 11', 12') zwischen dem Träger (2) und dem Lagerteil (41, 42; 41', 42'), wobei die überlast-knickbare Verbindung (11, 12; 11', 12') eine Verlagerung des Lagerteils (41, 42; 41', 42') in eine verkippt gehaltene Position freigibt, falls eine auf das Lagerteil (41, 42; 41', 42') wirkende Last einen vorgegebenen Wert überschreitet.

2. Wischeranordnung (1) nach Anspruch 1 mit zwei Lagerteilen (41, 42) und zwei Wischarmwellen (51, 52), wobei bei der vorgesehenen Verlagerung eines Lagerteils (41, 42) die darin gehaltene Wischarmwelle (51, 52) gegenüber ihrer Ausgangslage um eine Achse (A1, A2) verkippt ist, die annähernd parallel zu der Verbindungslinie der Wischarmwellen (51, 52) verläuft.

3. Wischeranordnung (1; 1') nach einem der vorangehenden Ansprüche, wobei die Stellen (61, 62, 63) zur Anbringung an einem Fahrzeugkörper an dem Träger (2) zwischen den überlast-knickbaren Verbindungen (11, 12; 11', 12') liegen.

4. Wischeranordnung (1) nach einem der vorangehenden Ansprüche mit einem Gestänge (81, 82) zur Übertragung der Antriebsbewegung auf die Wischarmwelle (51, 52), wobei die Achse (A1, A2) nicht wesentlich von der Richtung der Schub- und Zugkräfte in dem Gestänge (81, 82) abweicht.

5. Wischeranordnung (1; 1') nach einem der vorangehenden Ansprüche, wobei der vorgegebene Wert der Last zur Verlagerung des Lagerteils (41, 42; 41', 42') durch Haftreibung mitbestimmt wird.

6. Wischeranordnung (1) nach einem der vorangehenden Ansprüche, wobei die überlast-knickbare Verbindung ein Gelenk (11, 12) umfasst.

7. Wischeranordnung (1) nach Anspruch 4, wobei das Gelenk (11, 12) einachsig ist.

8. Wischeranordnung (1) nach Anspruch 6 oder 7, wobei der vorgegebene Wert der Last durch die Haftreibung in dem Gelenk (11, 12) mitbestimmt wird.

9. Wischeranordnung (1) nach einem der Ansprüche 6 bis 8, wobei der vorgegebene Wert der Last durch die Bruchlast eines die Bewegung des Gelenks (11, 12) verriegelnden mechanischen Bauteils (10) mitbestimmt wird.

10. Wischeranordnung (1) nach Anspruch 9, wobei das mechanische Bauteil einen Scherbolzen (10) umfasst.

11. Wischeranordnung (1) nach einem der Ansprüche 9 oder 10, wobei das mechanische Bauteil eine Klauenkupplung umfasst.

12. Wischeranordnung (1) nach einem der Ansprüche 9 bis 11, wobei das mechanische Bauteil eine Überlastrutschkupplung umfasst.

13. Wischeranordnung (1') nach einem der vorangehenden Ansprüche, wobei die überlast-knickbare Verbindung einen geschwächten Abschnitt (11', 12') einer starren Verbindungsstruktur (21', 22') zwischen dem Träger (2) und dem Lagerteil (41', 42') umfasst.

14. Wischeranordnung (1') nach Anspruch 13, wobei die starre Verbindungsstruktur (21', 22') in dem geschwächten Abschnitt (11', 12') aus einem plastisch verformbaren Material besteht.

15. Wischeranordnung (1') nach Anspruch 14, wobei in einem rohrförmigen Abschnitt der Verbindungsstruktur (11', 12') eine Querschnittsänderung angelegt ist, an deren Stelle das Widerstandsmoment der Verbindungsstruktur (11', 12') in einer Richtung verringert ist.

16. Fahrzeug mit einer Wischeranordnung (1; 1') nach einem der vorangehenden Ansprüche, wobei in Fahrzeuglängsrichtung die Wischarmwellen (51, 52) hinter den jeweiligen Achsen (A1, A2) der überlast-knickbaren Verbindungen (10, 11; 10', 11') liegen.
